# EUROPEAN PATENT APPLICATION

(11) **EP 2 620 621 A2**
(43) Date of publication of application: **31.07.2013**
(21) Application number: 13152389.6
(22) Date of filing: 23.01.2013
(51) Int. Cl.: F02C 7/232, F02C 9/26

(54) **Gas turbine engine system and method for controlling a temperature of a conduit in a gas turbine engine system**

(30) Priority: 26.01.2012 US 201213359068
(71) Applicant: General Electric Company, Schenectady, New York 12345 (US)
(72) Inventor: Widener, Stanley Kevin, Greenville, SC South Carolina 29615 (US)
(74) Representative: Cleary, Fidelma

(57) **Abstract**

According to one aspect of the invention, an engine system includes one or more fuel circuits (102) configured to provide gaseous fuel from a fuel source for combustion. The system further comprises a conduit (110) in fluid communication with the one or more fuel circuits (102), wherein the conduit (110) is configured to receive a first gaseous fuel flow (117) and an oxidant flow (150) for a reaction within the conduit (110), wherein a temperature of the conduit (110) is controlled by a second gaseous fuel flow (118) along an outer wall of the conduit (110).

## Description

### BACKGROUND OF THE INVENTION

The subject matter disclosed herein relates to gas turbine engine combustion systems, and more particularly, to methods and apparatus for controlling temperatures of apparatus receiving an oxidant and fuel for reaction

Gas turbine engines include apparatus for reaction of oxidants and fuel, such as gas turbine combustors configured to achieve low NOx emissions levels by employing a lean premixed fuel combustion process wherein the fuel and air that is required to bum the fuel are mixed prior to combustion. This type of combustor may be referred to as a Dry Low NOx (DLN) combustor. Higher efficiencies in gas turbines with DLN combustors are generally achieved by increasing overall gas temperature in the combustion chambers. In particular, the combustion chambers can experience elevated temperatures that cause thermal stress on the combustor components.

### BRIEF DESCRIPTION OF THE INVENTION

According to one aspect of the invention, an engine system includes one or more fuel circuits configured to provide gaseous fuel from a fuel source for combustion. The system further comprises a conduit in fluid communication with the one or more fuel circuits, wherein the conduit is configured to receive a first gaseous fuel flow and an oxidant flow for a reaction within the conduit, wherein a temperature of the conduit is controlled by a second gaseous fuel flow along an outer wall of the conduit.

According to another aspect of the invention, a method for controlling a temperature of a conduit in an engine system includes providing gaseous fuel from a fuel supply via a fuel circuit, receiving a first gaseous fuel flow from the fuel circuit in a conduit and receiving an oxidant flow to react with the first gaseous fuel flow within the conduit. The method also includes flowing a second gaseous fuel flow along an outer wall of the conduit to control a temperature of the conduit.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of a gas turbine engine system; and
FIG. 2 is a schematic diagram of an exemplary embodiment of a reformer in fluid communication with a fuel circuit of the gas turbine engine system of FIG. 1.

The detailed description explains embodiments of the invention, together with advantages and features, by way of example with reference to the drawings.

### DETAILED DESCRIPTION OF THE INVENTION

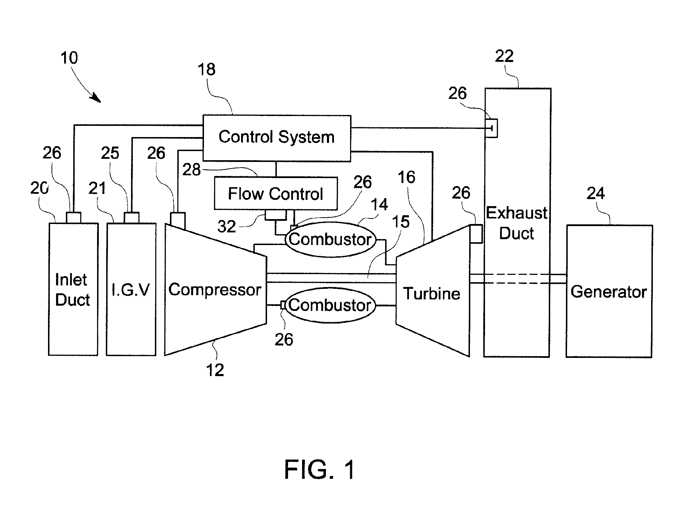

FIG. 1 is a schematic diagram of a gas turbine engine system 10 including a compressor 12, a combustor 14, and a turbine 16 coupled by a drive shaft 15 to the compressor 12. As seen in the figure, the system 10 can have a single combustor or a plurality of combustors (two shown in the figure). In one embodiment, the combustors are DLN combustors. In another embodiment, the combustors are lean premixed combustors. The gas turbine engine system 10 is managed by a combination of operator commands and a control system 18. An inlet duct system 20 channels ambient air to the compressor inlet guide vanes 21 which, by modulation with actuator 25, regulate the amount of air to compressor 12. An exhaust system 22 channels combustion gases from the outlet of turbine 16 through, for example, sound absorbing, heat recovery and possibly emissions control devices. Turbine 16 may drive a generator 24 that produces electrical power or any other type of mechanical output.

The operation of the gas turbine engine system 10 may be monitored by a variety of sensors 26 detecting various conditions of the compressor 12, turbine 16, generator 24, and ambient environment. For example, sensors 26 may monitor ambient temperature, pressure and humidity surrounding gas turbine engine system 10, compressor discharge pressure and temperature, turbine exhaust gas temperature and emissions, and other pressure and temperature measurements within the gas turbine engine. Sensors 26 may also comprise flow sensors, speed sensors, flame detector sensors, valve position sensors, guide vane angle sensors, dynamic pressure sensors, and other sensors that sense various parameters relative to the operation of gas turbine engine system 10. As used herein, "parameters" refer to physical properties whose values can be used to define the operating conditions of gas turbine engine system 10, such as temperatures, pressures, fluid flows at defined locations, and the like.

In addition to the above-mentioned sensors 26 there may be one or more sensors to monitor, measure or infer fuel properties sufficiently to determine the fuel composition prior to and/or after a fuel reformer 32 described below. The sensors may sense one or more of the following: fractional (fuel) composition, hydrogen content, carbon monoxide content, a parameter representative of the fuel MWI, fuel temperature, fuel and oxidant flow rates, products temperature, and the like.

A flow controller 28 responds to commands from the control system 18 to continuously regulate the fuel flowing from a fuel supply to the combustor(s) 14, and the fuel splits (independently controlled fuel supply to fuel circuits) to multiple fuel nozzle injectors (i.e., fuel circuits) located within each of the combustor(s) 14. The flow controller 28 also responds to control system 18 commands controlling flows of steam, oxidant, primary and secondary fuel into the fuel reformer 32. By modulating fuel splits via the flow controller 28 among the several fuel gas control valves, and controlling the flow of steam, oxidant, primary and secondary fuel flowing to the non-catalytic fuel reformer 32 with the control system 18, emissions, flame stability, turbine load turndown and dynamics are improved over the machine load range.

The control system 18 may be a computer system having a processor(s) that executes programs to control the operation of the gas turbine using the sensor inputs described above and instructions from additional operators. The programs executed by the control system 18 may include scheduling algorithms for regulating primary fuel flow, oxidant, steam flow, secondary fuel flow and fuel splits to combustor(s) 14.

It should be understood that the depicted fuel reformer 32 may be any suitable combustor, oxidant-fuel reaction apparatus or fuel conditioning apparatus in a gas turbine system. For ease of explanation, the exemplary fuel reformer 32 is a non-catalytic fuel reformer but may be a catalytic fuel reformer in other embodiments. In addition, in an embodiment, the fuel reformer 32 may also be included in gas turbine of a combined-cycle power plant, wherein the fuel reformer 32 is utilized to control the temperature and composition of a fuel supply to the turbine.

As depicted in FIG. 1, the fuel reformer 32 is in fluid communication with the fuel flow of one or more fuel circuits (not shown) in the fuel flow controller 28. The fuel reformer 32 is fed a mixture of oxidant and fuel, wherein the fuel and oxidant is premixed and then burned in the fuel reformer. The oxidant can be supplied to the fuel reformer by the compressor 12 or it may be provided by a separate oxidant supply. The fuel reformer 32 can be used to partially reform any gas and/or liquid fuel typically used in gas turbine engine combustion systems, such as natural gas (methane) and other like gaseous-phase fuels. The fuel reformer 32 is configured to partially oxidize a small percentage of the fuel to form hydrogen, carbon monoxide, and other combustion products. The gas turbine system 10 can comprise a single fuel reformer 32 or a plurality of fuel reformers in fluid communication with one or more of the fuel circuits.

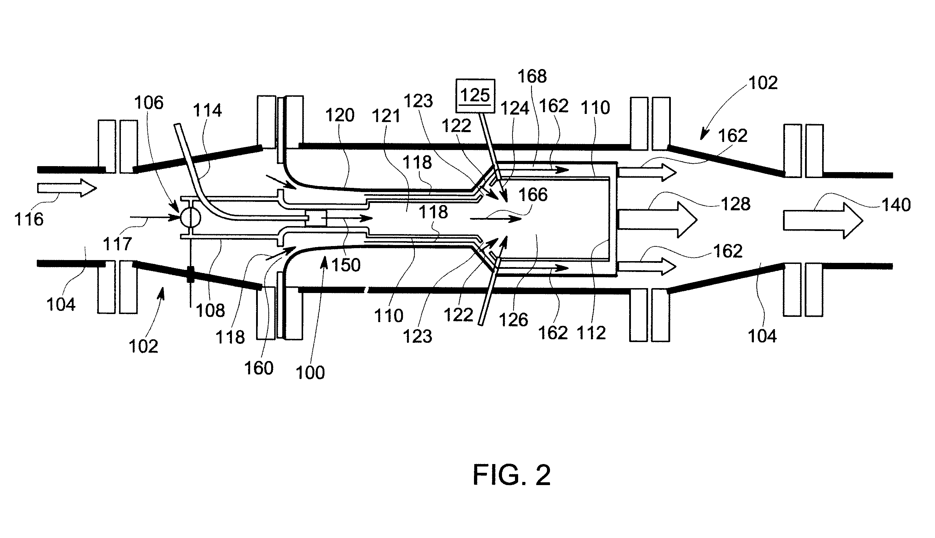

FIG. 2 illustrates an exemplary embodiment of a fuel conditioning apparatus, such as a non-catalytic fuel reformer 100, in fluid communication with a fuel circuit 102. The non-catalytic fuel reformer 100 is disposed within the fuel conduit 104 such that a portion of the fuel flowing through the fuel conduit 104 is diverted to pass through the non-catalytic fuel reformer 100. As depicted, a portion of the fuel can be diverted into the non-catalytic fuel reformer 100 through the operation of a valve system. In an embodiment, a valve 106 is disposed in an inlet 108 of a reformer conduit 110 (also referred to as "conduit" or "fuel conditioning conduit"). When open, the valve 106 is configured to controllably divert a portion of the fuel, such as first fuel flow 117, from the fuel conduit 104 to a chamber formed by the reformer conduit 110. The valve 106 may include one or more suitable valve assemblies, such as throttle valves or by-pass valves. Moreover, in embodiments with the use of valves in both the inlet 108 and outlet 112, the non-catalytic fuel reformer 100 can be substantially isolated from the fuel circuit 102. Additional valves (not shown) may be placed in an outlet of the reformer conduit 110. The valve 106, as well as the non-catalytic fuel reformer 100, can be in operative communication with a turbine engine control system to provide on-demand conditioning of a specific portion of the turbine fuel. The conditioning of the turbine fuel may include controlling a temperature and/or a chemical composition of the turbine fuel. An oxidant inlet 114 is in fluid communication with the non-catalytic fuel reformer 100 and is configured to provide an oxidant flow, such as oxygen flow 150, for premixing with the fuel before combustion in the fuel reformer. The oxidant inlet 114 can be in fluid communication with the compressor of the gas turbine or it can be in fluid communication with a separate oxidant supply. Again, the oxidant inlet 114 can supply oxygen, air, oxygen-enriched air, or combinations thereof to the non-catalytic fuel reformer 100.

As depicted, a primary fuel flow 116 flows within the fuel conduit and a portion of the primary fuel flow 116, shown as the first fuel flow 117, flows into through an open valve 106 into the inlet 108. In an embodiment, the primary fuel flow 116 is a flow of gaseous turbine fuel, wherein the primary fuel flow is cool or cold as compared to fuel temperatures after turbine warm-up. The remaining portion of the primary fuel flow 116 is directed outside the inlet 108 wherein a second fuel flow 118 is formed from a portion of the primary fuel flow 116. In the embodiment, the second fuel flow 118 travels in an annular passage between an outer conduit 120 and the reformer conduit 110. After the oxygen flow 150 mixes with first fuel flow 117 inside the reformer conduit 110 chamber, combustion occurs in a combustion region 121, thereby producing partially oxidized or reformed fuel 166. An additive fuel flow 122 and a steam flow 124 are then directed into the partially oxidized fuel downstream of the combustion region 121 in the reformer conduit 110 chamber. The additive fuel flow 122 is directed through passages 123 in the reformer conduit 110. Passages 123 may be fixed holes in the reformer conduit 110, or may include valves providing additional flow control. The steam flow 124 may be supplied by a suitable steam supply 125, such as a water line that is heated by portions of the turbine, or from the steam created in the boiler section of a combined-cycle power plant. In embodiments, the additive fuel flow 122 is supplied by portions of the second fuel flow 118 or a separate fuel supply dedicated to the non-catalytic fuel reformer 100. In an aspect, the first fuel flow 117 and additive fuel flow 122 are composed of portions of the primary fuel flow 116. Further, the additive fuel flow 122 and a remainder fuel flow 162 are portions of second fuel flow 118, wherein the remainder fuel flow 162 is mixed with a reacted fuel flow 128 downstream of the reformer conduit 110.

In an aspect, the non-catalytic fuel reformer 100 is positioned within or substantially concentric within the fuel circuit 102. In one aspect, the outer conduit 120 is a substantially cylindrical conduit with the reformer conduit 110 positioned within an annular cavity of the outer conduit 120, wherein a flow annulus 168 between the outer conduit 120 and reformer conduit 110 receives the second fuel flow 118. The arrangement directs the second fuel flow 118 along an outer wall of the reformer conduit 110 to convectively cool the reformer conduit 110. Accordingly, the reformer conduit 110 is able to withstand heat released by a reaction, such as the partial oxidation reaction, in a reaction region 126 in the reformer conduit 110 chamber. Controlling a temperature of portions of the reformer conduit 110 using the second fuel flow 118 enables higher temperatures within the fuel reformer 100 while preventing thermal damage of the material of the reformer conduit 110, such as by oxidation or thermal fatigue. Higher temperatures within the fuel reformer 100 provide flexibility in the type of fuels used in the gas turbine. In addition, the higher temperatures in the fuel reformer 100 can also improve efficiencies and power output. In embodiments, the flow velocity and convective heat transfer of the second fuel flow 118 is controlled by one or more valves or orifices in passages 160, or by the area of the annular passage between outer conduit 120 and the reformer conduit 110. Accordingly, the control of flow velocity and convective heat transfer of second fuel flow 118 enhances temperature control of the reformer conduit 110. In embodiments, any gaseous flow along an outer surface of a conduit wall may be used to provide convective cooling for components, such as the reformer conduit 110, wherein an oxidant and fuel react within the conduit. It should be understood that the depicted arrangement may be used with any engine or system where fuel reforming occurs. In an embodiment, the fuel reformer 100 and fuel circuit 102 may be used for conditioning fuel for a reciprocating engine.

With continued reference to FIG. 2, the additive fuel flow 122 and steam flow 124 are added and mixed with the oxidized fuel to cause a water-gas shift in a water-gas shift reaction region 126 inside the reformer, thereby producing additional hydrogen and CO in a reformate. In an exemplary embodiment, the reacted fuel flow 128 from the reformer conduit 110 has a high temperature, relative to remainder flow 162, wherein the reacted fuel flow 128 and remainder flow 162 form a mixed fuel stream 140 directed to the combustor 14 (FIG. 1). In an example, the mixed fuel stream 140, comprised of flows 128 and 162, has an increased reactivity which allows the combustion flame to stabilize at a lower adiabatic temperature than an equivalent flame from fuel flow without enhanced amounts of hydrogen. In addition, the depicted arrangement of fuel reformer 100 and reformer conduit 110 enables convective flow of gaseous fuel to provide temperature control of the conduit, thereby reducing wear and extending the component's life. The conduits 110 and 120 may be any suitable shape and size, wherein the conduits are configured to receive and direct fluid flow in a selected direction. The conduits 110 and 120 may have substantially the same or different geometries. Exemplary conduit 110 is a substantially cylindrical conduit with a chamber or cavity inside the conduit wall for an oxidant-fuel reaction. Other embodiments of conduits 110 and 120 may have a hexagon, octagon or other multi-sided cross-sectional shapes. In one embodiment, the non-catalytic fuel reformer 100 is positioned in the fuel circuit 102 used to supply a gas turbine engine of a combined-cycle gas turbine (CCGT) power plant. In exemplary CCGT systems, the fuel supplied to the gas turbine is not heated to a temperature within an operational range for the CCGT combustor in some cases, especially after plant startup (before the turbine system is warmed up). The depicted arrangement of the non-catalytic fuel reformer 100 may be placed in the fuel supply circuit for the gas turbine, wherein the arrangement is used heat the fuel flow during startup period for the CCGT system. In the embodiment, the second fuel flow 118 is heated by the air and fuel combusting in the reaction region 126 of reformer conduit 110, thus producing a heated mixed fuel flow 140 for operation of the gas turbine engine. Accordingly, an embodiment of the fuel reformer 100 results in the temperature controlled fuel flow 140 which enables the CCGT system to operate efficiently during the start-up period when the system is cool. The fuel reformer may also control the composition of the fuel flow 140, due to the reaction(s) within the fuel reformer 100. Specifically, when a portion of the fuel flow, such as fuel flow 117, is mixed with an oxidant, such as oxygen flow 150, and burned, the chemical composition of the resulting flow (i.e. products), such as reformed fuel flow 166, is a different composition as compared to the reactants. For example, the following equation represents an exemplary reaction,

CH4 + 2O2 ==> CO2 + 2H2O,

where pure methane fuel is supplied as fuel and pure oxygen is supplied as an oxidant, in a stoichiometric ratio. Therefore, when reformed fuel flow 166 is mixed back with the remainder fuel flow 162, the resulting mixture contains CH4, CO2 and H2O, where the incoming fuel stream was only CH4. Accordingly, the composition is controlled by controlling the proportions of fuel and oxidant mixed and burned.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Embodiments of the present invention will now be described, by way of example only, with reference to the accompanying drawings, in which:
1. An apparatus to control a temperature or composition of a gaseous fuel in an engine system, the apparatus comprising:
   a conduit (110) in fluid communication with a gaseous fuel circuit (102), wherein the conduit (110) is configured to receive a first gaseous fuel flow (117) and an oxidant flow (150) for a reaction within the conduit (110), wherein a second gaseous fuel flow (118) is directed along an outside surface of the conduit (110), wherein a mixed fuel stream is formed by combining the products from reaction of the first gaseous fuel flow (117) with the oxidant flow (150) and the second gaseous fuel flow (118), and wherein a temperature or composition of the mixed fuel stream is controlled by the reaction within the conduit (110).
2. The apparatus of clause 1, wherein the oxidant flow (150) comprises oxygen, air, oxygen-enriched air, or a combination comprising at least one of the foregoing.
3. The apparatus of clause 1 or 2, wherein a fuel supply provides the first and second gaseous fuel flows.
4. The apparatus of any of clauses 1 to 3, comprising an outer conduit disposed about the conduit to form an annulus to receive the second gaseous fuel flow.
5. The apparatus of any preceding clause, wherein the second gaseous fuel flow (118) is heated to an operating temperature for a combustor (12) downstream.
6. The apparatus of any preceding clause, wherein the conduit (110) is positioned within the gaseous fuel circuit (102).

## Claims

1. An engine system (10), comprising:
one or more fuel circuits (102) configured to provide gaseous fuel from a fuel source (116) for combustion; and
a conduit (110) in fluid communication with the one or more fuel circuits (102), wherein the conduit (110) is configured to receive a first gaseous fuel flow (117) and an oxidant flow (150) for a reaction within the conduit (110), wherein a temperature of the conduit (110) is controlled by a second gaseous fuel flow (118) along an outer wall of the conduit (110).

2. The system of claim 1, wherein the oxidant flow (150) comprises oxygen, air, oxygen-enriched air, or a combination comprising at least one of the foregoing.

3. The system of claim 1 or 2, wherein the fuel source (116) provides the first (117) and second (118) gaseous fuel flows.

4. The system of any of claims 1 to 3, comprising an outer conduit (120) disposed about the conduit (110) to form an annulus to receive the second gaseous fuel flow (118).

5. The system of any of claims 1 to 4, wherein the conduit (110) comprises a combustor (14).

6. The system of any of claims 1 to 4, wherein the conduit (104) is positioned within the one or more fuel circuits (102).

7. The system of any preceding claim, comprising a compressor (12), a combustor (14) and a turbine (16), wherein the fuel source (116) provides gaseous fuel to the combustor (14) for combustion.

8. The apparatus of any preceding claim, wherein the second gaseous fuel flow (118) is heated to an operating temperature for a combustor (12) downstream.

9. A method for controlling a temperature of a conduit in an engine system, comprising:
providing gaseous fuel (116) from a fuel supply via a fuel circuit (107);
receiving a first gaseous fuel flow (117) from the fuel circuit in a conduit (110);
receiving an oxidant flow (150) to react with the first gaseous fuel flow (117) within the conduit (110); and
flowing a second gaseous fuel flow (118) along an outer wall of the conduit (110) to control a temperature of the conduit (110).

10. The method of claim 9, wherein the oxidant (150) comprises oxygen, air, oxygen-enriched air, or a combination comprising at least one of the foregoing.

11. The method of claim 9 or 10, wherein providing gaseous fuel (116) from the fuel supply comprises providing the first and second gaseous fuel flows (117, 118) from the fuel supply via the fuel circuit (102).

12. The method of any of claims 9 to 11, wherein flowing the second gaseous fuel flow (118) comprises flowing the second gaseous fuel flow (118) through an annulus (168) formed between the conduit (110) and an outer conduit (120) disposed about the conduit (110).

13. The method of any of claims 9 to 12, wherein the conduit (110) comprises a combustor (14).

14. The method of any of claims 9 to 12, wherein the conduit (110) is positioned within the fuel circuit (102).

15. The method of any of claims 9 to 14, wherein the gaseous fuel (116) is provided from a fuel supply via the fuel circuit (102) to a combustor (14).
